# EUROPEAN PATENT APPLICATION

(11) **EP 1 655 705 A1**
(43) Date of publication of application: **10.05.2006**
(21) Application number: 04746317.9
(22) Date of filing: 17.06.2004
(51) Int. Cl.: G09F 9/00

(54) **IMAGE DISPLAY**

(30) Priority: 20.06.2003 JP 2003177044
(71) Applicant: KABUSHIKI KAISHA TOSHIBA, Tokyo 105-8001 (JP)
(72) Inventor: MASUNAGA, Takayuki, c/o Toshiba Corporation, Minato-ku, Tokyo 105-8001 (JP); TAKAHASHI, Fujio, c/o Toshiba Corporation, Minato-ku, Tokyo 105-8001 (JP); MORIMOTO, Jun, c/o Toshiba Corporation, Minato-ku, Tokyo 105-8001 (JP); OOFUCHI, Shinobu, c/o Toshiba Corporation, Minato-ku, Tokyo 105-8001 (JP); YOKOTA, Masahiro, c/o Toshiba Corporation, Minato-ku, Tokyo 105-8001 (JP); OKAMOTO, Hisakazu, c/o Toshiba Corporation, Minato-ku, Tokyo 105-8001 (JP)
(74) Representative: HOFFMANN EITLE
(86) International application number: PCT/JP2004/008848
(87) International publication number: WO 2004/114258

(57) **Abstract**

A rectangular rear substrate which constitutes an envelope of an image display device is fitted with a reinforcing frame (30) which reinforces the envelope. The reinforcing frame has a pair of first frame portions (32) individually extending substantially parallel to long sides of the rear substrate and a pair of second frame portions (34) extending substantially parallel to short sides of the rear substrate and connecting the first frame portions. Each of the second frame portions meets a relationship ΔH/H = 13 to 33%, where H is a length of each long side of the rear substrate and ΔH is a distance between each short side of the rear substrate and each of the second frame portions.

## Description

### Technical Field

This invention relates to an image display device, and more particularly, to a flat image display device with a reinforcing frame.

### Background Art

In recent years, various image display devices have been developed as a next generation of lightweight, thin display devices to replace cathode-ray tubes (hereinafter referred to as CRTs). These image display devices include a liquid crystal display (hereinafter referred to as an LCD), plasma display panel (hereinafter referred to as a PDP), field emission display (hereinafter referred to as an FED), surface-conduction electron emission display (hereinafter referred to as an SED), etc. In the LCD, the intensity of light is controlled by utilizing the orientation of a liquid crystal. In the PDP, phosphors are caused to glow by ultraviolet rays that are produced by plasma discharge. In the FED, phosphors are caused to glow by electron beams from field-emission electron emitting elements. In the SED, phosphors are caused to glow by electron beams from surface-conduction electron emitting elements.

In general, an FED or SED has a front substrate and a rear substrate that are opposed to each other across a given gap. These substrates constitute a vacuum envelope. The front substrate is formed with a phosphor screen, while the rear substrate is provided with a plurality of electron emitting elements for use as electron sources that excite the phosphor screen. According to the FED or SED of this type, the thickness of the display device can be reduced to several millimeters or thereabouts. When compared with a CRT that is used as a display of an existing TV set or computer, therefore, it can be made lighter and thinner, and in addition, more energy-efficient.

With the recent increase in size of image display devices, substrates that constitute envelopes have also become large. With the increase in size, however, there have arisen problems such as reduction in strength of the envelopes, lowering of resonance frequency, increased weight, etc. In order to enhance the mechanical strength of the envelopes, therefore, a structure is proposed in which a reinforcement frame is attached to the reverse side of a rear substrate. Described in Jpn. Pat. Appln. KOKAI Publication No. 2000-10493, in particular, is a structure where a metal plate for use as a frame, having substantially the same size as a rear substrate, is stuck to the entire reverse surface of the rear substrate. Proposed in Jpn. Pat. Appln. KOKAI Publication No. 11-146305 is a structure where a rectangular metal frame is fixed along the peripheral edge portion of the outer surface of a rear substrate.

In the case of the aforesaid structure where the metal plate is stuck to the entire reverse surface of the rear substrate, however, the display device becomes heavy and thick as a whole, thereby hindering the achievement of the primary object of the display device, that is, reduction in weight and thickness. In the case of the aforesaid structure, moreover, the ratio of enhancement of the strength of the display device is lower than the ratio of increase of the weight or the like.

In the case where the rectangular metal frame is used, the strength of the central part of the display device cannot be fully increased. If the display device is dropped or subjected to any external load, therefore, the central part is easily distorted. It is hard for the rectangular metal frame to maintain sufficient strength to resist twisting.

### Disclosure of Invention

This invention has been made in consideration of these circumstances, and its object is to provide an image display device capable of maintaining sufficient mechanical strength with minimum reinforcement and realizing reduction in thickness and weight.

In order to achieve the object, an image display device according to an aspect of the invention comprises an envelope, provided with a front substrate having a display screen and a rectangular rear substrate opposed to the front substrate, and a reinforcing frame which is attached to an outer surface of the rear substrate and reinforces the envelope,
the reinforcing frame having a pair of first frame portions which individually extend substantially parallel to long sides of the rear substrate and a pair of second frame portions which extend substantially parallel to short sides of the rear substrate and connect the first frame portions,
each of the second frame portions meeting a relationship ΔH/H = 12 to 32%, where H is a length of each long side of the rear substrate and ΔH is a distance between each short side of the rear substrate and each of the second frame portions.

According to another aspect of the invention, there is provided an image display device comprising an envelope, provided with a front substrate having a display screen and a rectangular rear substrate opposed to the front substrate, and a reinforcing frame which is attached to an outer surface of the rear substrate and reinforces the envelope,
the reinforcing frame having a pair of first frame portions which individually extend substantially parallel to long sides of the rear substrate at distances therefrom, a pair of second frame portions which extend substantially parallel to short sides of the rear substrate at distances therefrom and connect the first frame portions, a first mounting portion which extends along the outer surface of the rear substrate from each of the first frame portions toward each long side of the rear substrate and is configured to be mounted with an electronic component, and a second mounting portion which extends along the outer surface of the rear substrate from each of the second frame portions toward the other second frame portion and is configured to be mounted with an electronic component.

According to the image display device constructed in this manner, the reinforcing frame can maintain sufficient strength of the envelope despite the increase of its size and reduction in thickness that are involved in the increase of the screen size. In this case, the reinforcing frame is formed of elongated first and second frame portions and configured to be an optimum frame of the minimum necessary size for the envelope, so that the entire image display device can be reduced in weight and thickness without failing to enhance the mechanical strength of the device and prevent resonance.

### Brief Description of Drawings

FIG. 1 is a perspective view showing an appearance of an FED according to a first embodiment of this invention;
FIG. 2 is a sectional view of the FED taken along line II-II of FIG. 1;
FIG. 3 is a perspective view showing the back side of the FED;
FIG. 4 is an exploded perspective view showing a reinforcing frame of the FED;
FIG. 5 is a plan view schematically showing the locational relationship between an envelope and the reinforcing frame constituting the FED;
FIG. 6 is a diagram showing the displacement ratio of the envelope and ΔH/H and its relationship with ΔV/V;
FIG. 7 is a diagram showing the displacement ratio of the envelope and ΔV/V and its relationship with ΔH/H;
FIG. 8 is a perspective view showing a reinforcing frame according to a modification of this invention;
FIG. 9 is an exploded perspective view showing the reinforcing frame according to the above modification;
FIG. 10 is a perspective view showing an FED according to a second embodiment of this invention;
FIG. 11 is a sectional view of the FED taken along line XI-XI of FIG. 10;
FIG. 12 is an enlarged perspective view showing a part of a reinforcing frame of the FED according to the second embodiment;
FIG. 13 is an exploded perspective view of the reinforcing frame;
FIG. 14 is a perspective view showing the back side of the reinforcing frame;
FIG. 15 is a plan view typically showing the locational relationship between contact portions of the reinforcing frame and a rear substrate;
FIG. 16 is a sectional view showing an example in which circuit boards are mounted individually on first and second mounting portions of the reinforcing frame;
FIG. 17 is a sectional view showing a modification in which a circuit board mounted on the mounting portion of with use of a movable link;
FIG. 18 is an exploded perspective view showing first and second frame portions of a reinforcing frame according to a modification of this invention;
FIG. 19 is a sectional view of the reinforcing frame according to the modification shown in FIG. 18;
FIG. 20 is a perspective view showing an FED according to a third embodiment of this invention;
FIG. 21 is a sectional view of the FED taken along line XXI-XXI of FIG. 20;
FIG. 22 is a sectional view of the FED taken along line XXII-XXII of FIG. 20;
FIG. 23 is an enlarged perspective view showing a part of a reinforcing frame of the third embodiment; and
FIG. 24 is a sectional view of the FED taken along line XXIV-XXIV of FIG. 20.

### Best Mode for Carrying Out the Invention

An embodiment in which an image display device according to this invention is applied to an FED will now be described in detail with reference to the drawings.

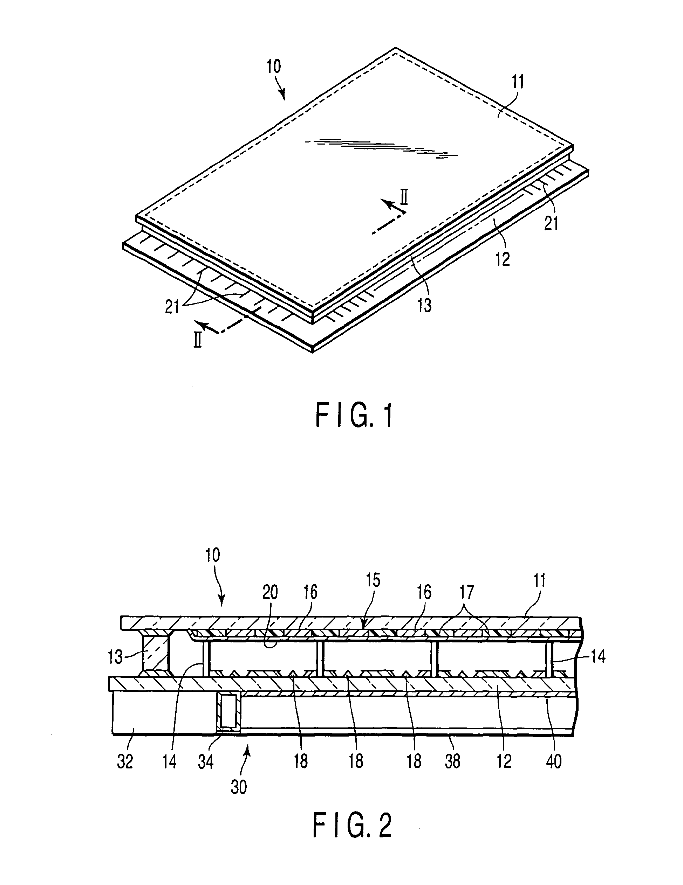

As shown in FIGS. 1 and 2, this FED comprises a front substrate 11 and a rear substrate 12, which are formed of a rectangular glass plate as an insulating substrate each. These substrates are located opposite each other with a gap of about 1 to 2 mm between them. The front substrate 11 and the rear substrate 12 have their respective peripheral edge portions joined together by a rectangular frame member 13, thereby forming a flat, rectangular vacuum envelope 10 of which the interior is kept at a vacuum. A space between the peripheral portion of the inner surface of the front substrate 11 and the sidewall 18, and a space between the peripheral portion of the inner surface of the rear substrate 12 and the frame member 18 is sealed with low-melting metal sealing material such as indium or an alloy including indium, for example, or with low-melting sealing material such as fritted glass.

In order to support an atmospheric load that acts on the rear substrate 12 and the front substrate 11, a plurality of plate-shaped spaces 14 are provided in the vacuum envelope 10. These spacers 14 extend parallel to the short sides of the vacuum envelope 10 and are arranged at given intervals in a direction parallel to the long sides. The shape of the spacers 14 is not limited particularly to a plate shape, but columnar spacers, for example, may be used instead.

A phosphor screen 15 serving as a display surface is formed on the inner surface of the front substrate 11. The phosphor screen 15 includes phosphor layers 16 which emit light of red, green, and blue, and a black light absorbing layer 17 in a matrix shape. A metal back 20, which is formed of, for example, an aluminum layer, is formed on the phosphor screen 15, and a getter film, not shown, is formed on the metal back.

Provided on the inner surface of the rear substrate 12 are a large number of electron emitting elements 18 for use as electron emission sources that individually emit electron beams and excite the phosphor layers 16. These electron emitting elements 22 are arranged in a plurality of columns and a plurality of rows corresponding to pixels, individually. Each of the electron emitting elements 18 includes an electron emitting portion, and a pair of element electrodes for applying a voltage to the electron emitting portion. A large number of wires 21 that supply potential to the electron emitting elements 18 are provided in a matrix on the inner surface of the second substrate 12, and their end portions are drawn out to the peripheral edge portions of the vacuum envelope 15.

In the FED constructed in this manner, when displaying an image, anode voltages are applied to the phosphor screen 15 and the metal back 20, and the electron beams emitted from the electron emitting elements 18 are accelerated by the anode voltages and collided with the phosphor screen 15. Thus, the phosphor layers 16 of the phosphor screen 15 are excited to luminescence, thereby displaying the image.

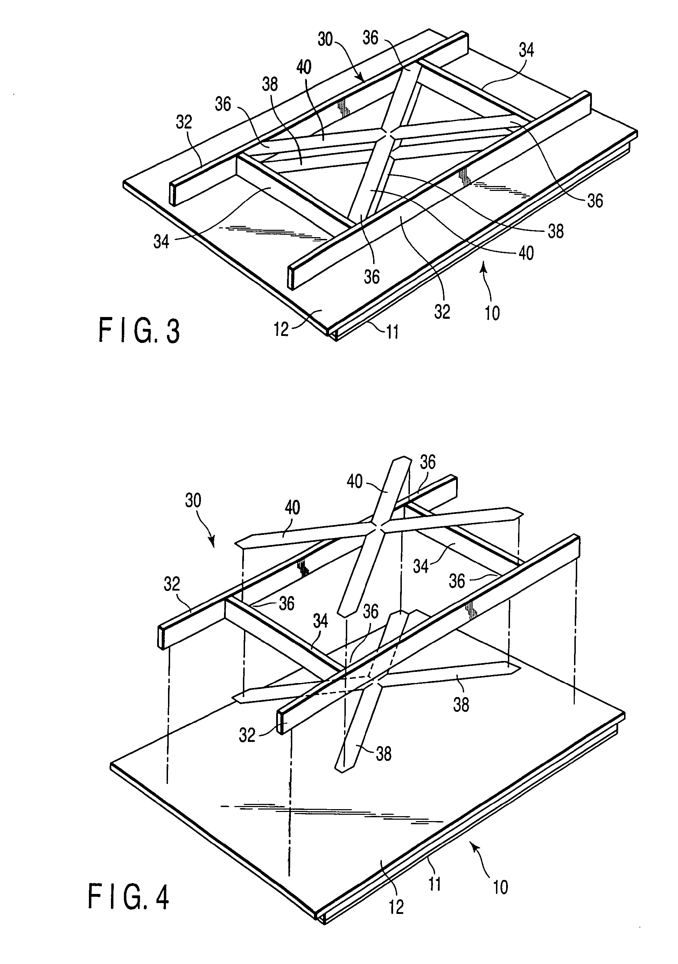

As shown in FIGS. 2 to 4, the FED comprises a reinforcing frame 30 that is attached to the outer surface of the rear substrate 12 and reinforces the envelope 10. The reinforcing frame 30 has a pair of elongated first frame portions 32, which extend parallel to each other, and a pair of elongate second frame portions 34, which extend at right angles to the first frame portions 32 and parallel to each other. The first frame portions 32 and the second frame portions 34 are each formed of a hollow rod of, for example, aluminum that has a rectangular cross section. The opposite end portions of each second frame portion 34 are fixed individually to the first frame portions and couple the first frame portions to each other. Thus, the reinforcing frame 30 is substantially in the form of a well curb as a whole.

The reinforcing frame 30 is provided with a pair of first connecting rods 38 and a pair of second connecting rods 40, for use as reinforcing members for improving torsional rigidity. Specifically, the reinforcing frame 30 has four corner portions 36 at which the first frame portions 32 and the second frame portions 34 cross one another. Each first connecting rod 38 connects each set of diagonally opposite corner portions 36. The pair of first connecting rods 38 extend across each other and are connected to each other at their intersection. In the present embodiment, the pair of first connecting rods 38 are formed integrally with each other and are substantially in the shape of a cross.

Likewise, each second connecting rod 40 connects each set of diagonally opposite corner portions 36. The pair of second connecting rods 40 extend across each other and are connected to each other at their intersection. The pair of second connecting rods 40 are formed integrally with each other and are substantially in the shape of a cross.

The first connecting rods 38 are fixed on the side of the rear substrate 12 of the reinforcing frame 30, while the second connecting rods 40 are fixed on the outer surface side of the reinforcing frame. The first connecting rods 38 and the second connecting rods 40 are opposed to one another with a gap between them. The reinforcing members are not limited to connecting rods but may alternatively be wires.

The reinforcing frame 30 is fixed to the envelope 10 by bonding the first and second frame portions 32 and 34 to the outer surface of the rear substrate 12 at a plurality of spots. When the reinforcing frame 30 is fixed to the envelope 10, the pair of first frame portions 32 extend substantially parallel to the long sides of the rear substrate 12, while the pair of second frame portions 34 extend substantially parallel to the short sides of the rear substrate. Each first frame portion 32 is located at a predetermined distance from its corresponding long side of the rear substrate 12. Likewise, each second frame portion 34 is located at a predetermined distance from its corresponding short side of the rear substrate 12.

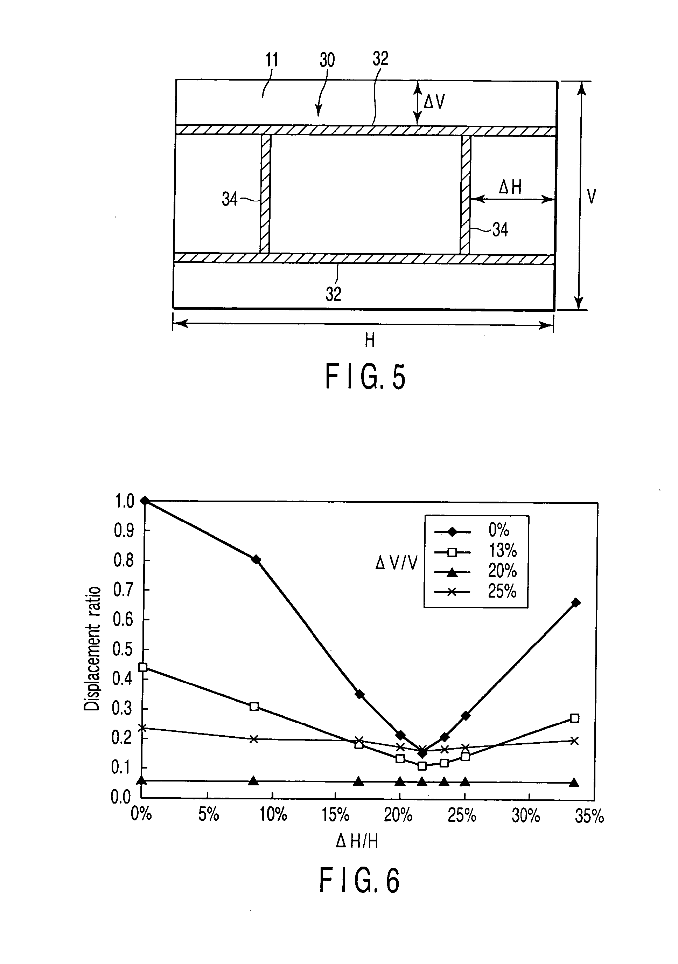

If the length of each long side of the rear substrate 12 and the distance (amount of offset from each short side) between each short side of the rear substrate and each second frame portion 34 is H and ΔH, respectively, as shown in FIG. 5, each second frame portion is located so as to meet the relationship ΔH/H = 12 to 32%. If the length of each short side of the rear substrate and the distance (amount of offset from each long side) between each long side of the rear substrate and each first frame portion 32 is V and ΔV, respectively, each first frame portion is located so as to meet the relationship ΔV/V = 12 to 32%.

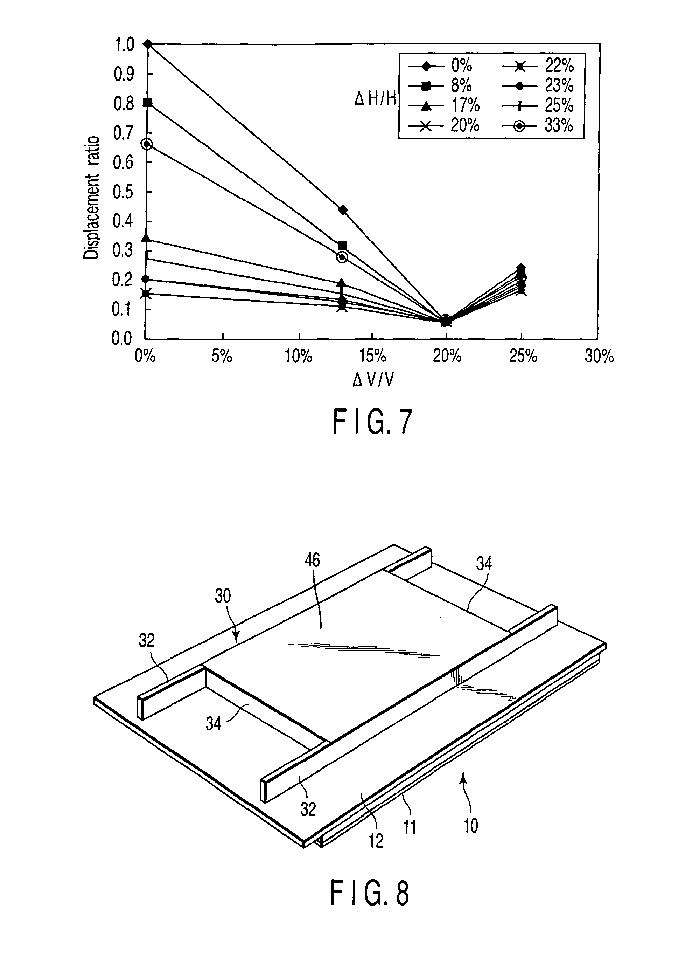

The inventors hereof measured the strength of the envelope 10 with the aforesaid values of ΔH/H and ΔV/V changed variously. FIGS. 6 and 7 show the results of this measurement. What was measured here is the relationship between ΔH/H and ΔV/V and a rear substrate displacement ratio (1.0 with ΔH = 0 and ΔV = 0) for the case where a load of 1 G is applied to the envelope 10. Further, the displacement ratio of the central part of the rear substrate is supposed to be 1 when a reinforcing frame of a conventional structure, that is, a rectangular reinforcing frame that is fixed along the peripheral edge portion of the rear substrate, is used.

If the second frame portions 34 are located so as to meet the relationship ΔH/H = 12 to 32%, as seen from FIG. 6, the displacement ratio of the rear substrate is reduced to 60 to 5% as compared with the case where the reinforcing frame of the conventional structure is used. If the second frame portions 34 meet the relationship ΔH/H = 16 to 28%, the displacement ratio of the rear substrate is reduced to 40 to 5%. If the second frame portions 34 meet the relationship ΔH/H = 18 to 26%, moreover, the displacement ratio of the rear substrate is reduced to 30 to 5%. More preferably, the displacement ratio of the rear substrate 12 can be reduced to 20 to 5% by locating the second frame portions 34 so as to meet the relationship ΔH/H = 20 to 24%.

If the first frame portions 32 are located so as to meet the relationship ΔV/V = 12 to 32%, as seen from FIG. 7, moreover, the displacement ratio of the rear substrate can be reduced to 50 to 5% as compared with the case where the reinforcing frame of the conventional structure is used. If the first frame portions 32 meet the relationship ΔV/V = 16 to 28%, the displacement ratio of the rear substrate is reduced to 30 to 5%. If the first frame portions 32 meet the relationship ΔV/V = 18 to 26%, moreover, the displacement ratio of the rear substrate is reduced to 20 to 5%. More preferably, the displacement ratio of the rear substrate can be reduced to 10 to 5% by locating the first frame portions 32 so as to meet the relationship ΔV/V = 20 to 24%.

Each first frame portion 32 is formed so that its length is equal to or less than the length H of each long side of the rear substrate 12. The distance between each end of each first frame portion 32 and each short side of the rear substrate 12 is set within a range of 0 to 30 mm, for example. Further, the end portions of each second frame portion 34 may be formed extending beyond the first frame portions 32 to positions near the long sides of the rear substrate 12. The first and second frame portions 32 and 34 are not limited to the configuration in which independently formed frame portions are connected, but may be formed by integral molding. In this case, the first and second frame portions are not limited to aluminum but may alternatively be formed of any other material such as iron.

According to the FED constructed in this manner, the reinforcing frame 30 can maintain the sufficient strength of the envelope 10 despite the increase of its size that is involved in the increase of the screen size. In this case, the reinforcing frame 30 is composed of the elongate first and second frame portions 32 and 34 and is configured and located with respect to the envelope so as to meet the aforesaid relationship between ΔH/H and ΔV/V. Thus, the optimum reinforcing frame of the minimum necessary size can be obtained, and the entire FED can be reduced in weight and thickness without failing to enhance the mechanical strength of the device and prevent resonance.

With use of the first and second frame portions 32 and 34 that connect the corner portions of the reinforcing frame 30 to one another, the torsional rigidity of the reinforcing frame can be enhanced about five times as compared with the case where these connecting rods are not provided. Thereupon, the mechanical strength of the entire FED can be enhanced further.

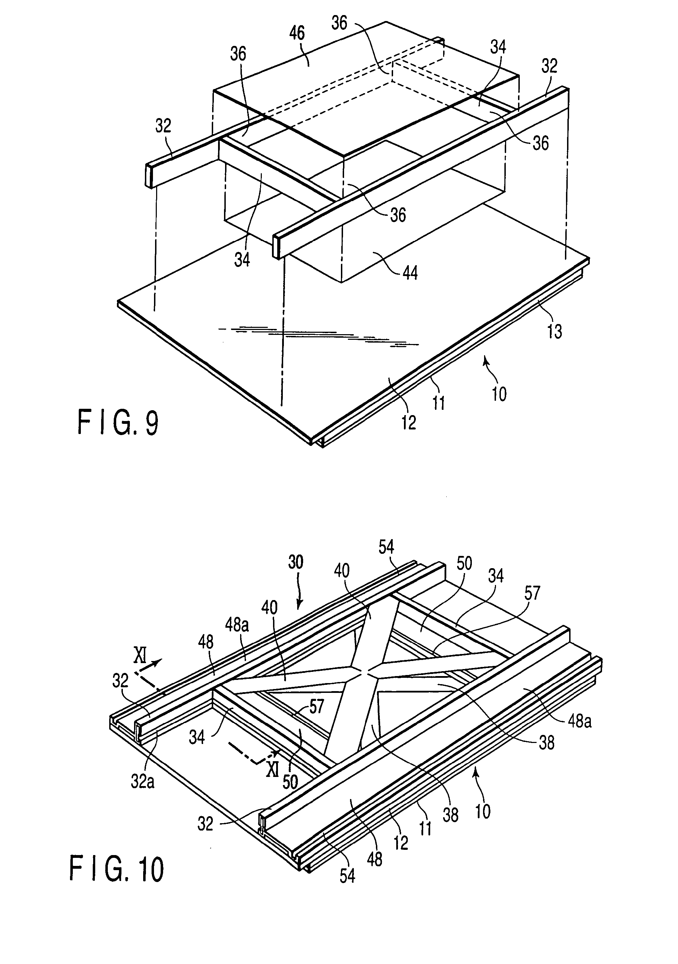

Although the two sets of connecting rods 38 and 40 are provided in the first embodiment described above, the connecting rods may alternatively be provided in only one set. The torsional strength can be also enhanced in this case. The reinforcing members are not limited to the aforementioned connecting rods but may be formed of reinforcing plates, as shown in FIGS. 8 and 9. In this case, the reinforcing frame 30 is provided with a first reinforcing plate 44 and a second reinforcing plate 46 that are rectangular in shape. Each reinforcing plate has a size substantially equal to that of a region surrounded by first and second frame portions 32 and 34. The first reinforcing plate 44 is fixed overlapping the first and second frame portions 32 and 34 on the side of the rear substrate 12 with respect to the reinforcing frame 30. It covers the region surrounded by the first and second frame portions and connects the four corner portions 36 to one another. The second reinforcing plate 46 is fixed covering the first and second frame portions 32 and 34 on the outer surface side of the reinforcing frame 30. It covers the region surrounded by the first and second frame portions and connects the four corner portions 36 to one another. The first and second reinforcing plates 44 and 46 are opposed parallel to each other with a gap between them.

If these reinforcing plates each in the form of a rectangular plate are used, the torsional strength of the reinforcing frame 30 can be enhanced about eight times as compared with the case where no reinforcing plates are provided. Although the two reinforcing plates are provided, the torsional strength can be enhanced if only one of the reinforcing plates is provided. The aforementioned connecting rods may be in used in combination in place of one of the reinforcing plates. If the FED is used as a display device, moreover, the envelope 10 and the reinforcing frame 30 are housed in a cabinet (not shown). In this case, a part of the cabinet may be configured to double as the aforesaid second reinforcing plate 46.

The following is a description of a second embodiment of this invention. As shown in FIGS. 10 to 13, each first frame portion 32 and each second frame portion 34 that constitute a reinforcing frame 30 are formed integrally having a first mounting portion 48 and a second mounting portion 50, respectively. As in the foregoing first embodiment, the first and second frame portions 32 and 34 are each formed of a hollow rod having a rectangular cross section and are located with respect to a rear substrate 12 of an envelope 10 so as to meet the aforesaid relationship between ΔH/H and ΔV/V. The first and second frame portions 32 and 34 are set substantially upright on the outer surface of the rear substrate 12 and constitute a high-strength portion that virtually reinforces the envelope 10. A rise height h of the first and second frame portions 32 and 34 above the rear substrate 12 is set to, for example, 40 to 50 mm.

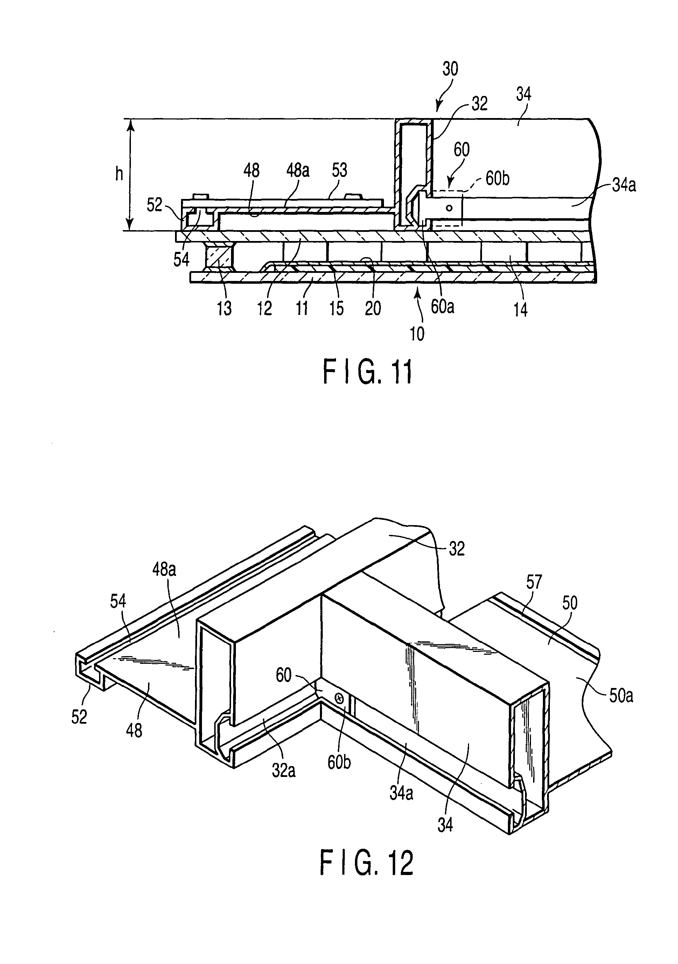

The first mounting portion 48 extends along the outer surface of the rear substrate 12 from the first frame portion 32 to the long side of the rear substrate. The first mounting portion 48 extends throughout the length of the first frame portion 32. The outer surface of the first mounting portion 48 forms a flat mounting surface 48a on which a circuit board can be mounted. An extending end of the first mounting portion 48 is formed integrally with a hollow rib 52 that projects toward the rear substrate 12 and extends along the long side of the rear substrate. The first mounting portion 48 is formed with a slot 54 that extends in the extending direction of the first frame portion 32 and opens in the mounting surface 48a and the rib 52. As shown in FIG. 11, a circuit board 53 as an electronic component for driving an FED is mounted on the mounting surface 48a of the first mounting portion 48 and fixed by screwing, for example.

The second mounting portion 50 extends along the outer surface of the rear substrate 12 from the second frame portion 34 toward the other second frame portion. The second mounting portion 50 extends throughout the length of the second frame portion 34. The outer surface of the second mounting portion 50 forms a flat mounting surface 50a on which a circuit board can be mounted. An extending end of the second mounting portion 50 is formed integrally with a hollow rib 56 that projects toward the rear substrate 12 and extends substantially parallel to the short side of the rear substrate. The second mounting portion 50 is formed with a slot 57 that extends in the extending direction of the second frame portion 34 and opens in the mounting surface 50a and the rib 56. An FED drive circuit board (not shown) is mounted on the mounting surface 50a of the second mounting portion 50 and fixed by screwing, for example.

As shown in FIGS. 10 to 13, a first guide slot 32a is formed in that sidewall of each first frame portion 32 which is located opposite from the first mounting portion 48 and extends throughout the length of the first frame portion in its longitudinal direction. Likewise, a second guide slot 34a is formed in that sidewall of each second frame portion 34 which is located opposite from the second mounting portion 50 and extends throughout the length of the second frame portion in its longitudinal direction. The first frame portion 32 and each end of the second frame portion 34 is connected to each other by a connecting member 60 that is passed through the first and second guide slots 32a and 34a.

The connecting member 60 is formed by bending a plate material in the shape of an L and integrally has a first link portion 60a, which is movably set in the first guide slot 32a of the first frame portion 32, and a second link portion 60b passed through the second guide slot 34a of the second frame portion 34. In assembling the reinforcing frame 30, the first link portion 60a of the connecting member 60 is first inserted into the first guide slot 32a of the first frame portion 32. After the first link portion 60a is moved along the first guide slot 32a to a desired position, it is screwed to the first frame portion 32. Subsequently, one end portion of the second frame portion 34 is aligned with the first frame portion 32, and the second link portion 60b is inserted into the second guide slot 34a of the second frame portion. Thereafter, the first frame portion 32 and the second frame portion 34 are connected together by screwing the second link portion 60b to the second frame portion 34. The individual end portions of the second frame portions 34 are connected to the first frame portions 32 in similar processes, whereupon the curb-shaped reinforcing frame is obtained.

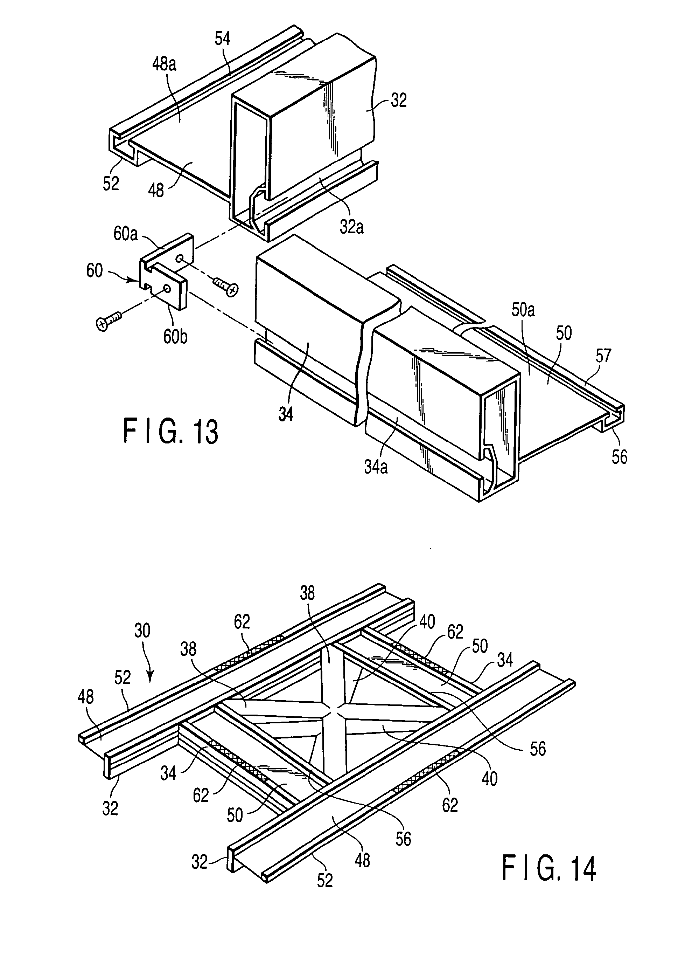

As shown in FIGS. 10 and 14, the reinforcing frame 30 is provided with a pair of first connecting rods 38 and a pair of second connecting rods 40, which serve as reinforcing members, individually. The first connecting rods 38 are provided on the rear substrate side of the reinforcing frame 30 and connect corner portions that are opposed in the diagonal direction of the reinforcing frame. Each first connecting rod 38 connects corner portions that are defined by the first frame portions 32 and the second mounting portions 50. Further, the pair of second connecting rods 40 are provided on the outer surface side of the reinforcing frame 30 and connect corner portions that are defined by the first frame portions 32 and the second frame portions 34.

The reinforcing frame 30 constructed in this manner is bonded to the outer surface of the rear substrate 12 in a manner such that the respective bottom surfaces of the first and second frame portions 32 and 34 and the respective bottom surfaces of the ribs 52 and 56 on the first and second mounting portions 48 and 50 are in contact with the rear substrate. Normally, if the envelope 10 is heated to subject the rear substrate 12 to thermal deformation during the operation of the FED, the central part of the rear substrate 12 undergoes the severest thermal deformation, and the amount of thermal deformation changes radially outward from the central part. Thus, the rear substrate may possibly be damaged if the thermal deformation of the rear substrate 12 is restrained by the reinforcing frame 30.

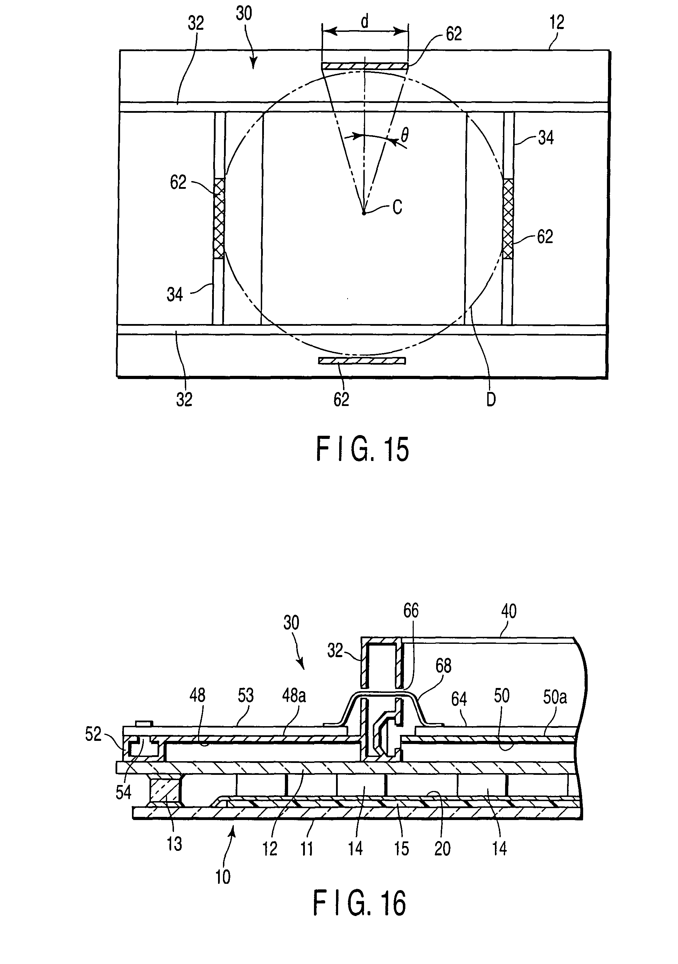

Desirably, therefore, a plurality of adhesive joints 62 of the reinforcing frame 30 that are bonded to the rear substrate 12 should be provided on a circle D that is concentric with a center C of the rear substrate or in a similar state. According to the present embodiment, as shown in FIGS. 14 and 15, the plurality of adhesive joints 62 extend in directions tangential to the circle D. The adhesive joints 62 are provided in the longitudinally central part of the rib 52 on each first mounting portion 48 and the longitudinally central part of each second frame portion 34. A length d of each adhesive joint 62 is set so that an angle θ between a line that passes through the center C of the circle D and extends at right angles to the adhesive joint 62 and a line that connects the center C and each end of the adhesive joint ranges from about 2 to 30°. Thus, the reinforcing frame 30 can be fixed to the rear substrate 12 without restraining the thermal deformation of the rear substrate, and the envelope including the rear substrate can be prevented from being damaged.

Other configurations are the same as those of:the foregoing first embodiment, so that like reference numerals are used to designate like portions, and a detailed description thereof is omitted.

According to the FED of the second embodiment constructed in this manner, the reinforcing frame 30 can maintain the sufficient strength of the envelope 10 despite the increase of its size that is involved in the increase of the screen size. According to this FED, like the one according to the first embodiment, the optimum reinforcing frame of the minimum necessary size can be obtained, so that the entire FED can be reduced in weight and thickness without failing to enhance the mechanical strength of the device and prevent resonance.

In the second embodiment, the first and second frame portions 32 and 34 are connected to each other by the connecting member 60 that is set in the first and second guide slots 32a and 34a. When compared with the case where frame portions are fastened together by using independent corner members, therefore, the number and weight of components can be reduced. Since the connecting member 60 is movably set in the first guide slot 32a, the first and second frame portions 32 and 34 can be connected in any desired position.

Further, each constituent part of the reinforcing frame 30 is an L-shaped structure having a mounting portion and a frame portion that serves as a high-strength portion. The frame portion can maintain the strength as an electronic component is mounted on the mounting portion. Thus, the rear side of the envelope 10 can be used effectively, so that the entire display device can be reduced in size.

As shown in FIG. 16, another circuit board 64, like the circuit board 53 on the mounting surface 48a of the first mounting portion 48, may be mounted on the mounting surface 50a of the second mounting portion 50. In this case, the first frame portion 32 may be provided with a through hole 66 for wiring such that the circuit boards 53 and 64 can be connected electrically to each other by a wire, e.g., a flexible cable 68, passed through the through hole 66. According to this arrangement, the circuit boards can be connected to each other without elongating the wire, so that the space efficiency and assemblability can be improved. Further, careless breaking of the wire can be prevented.

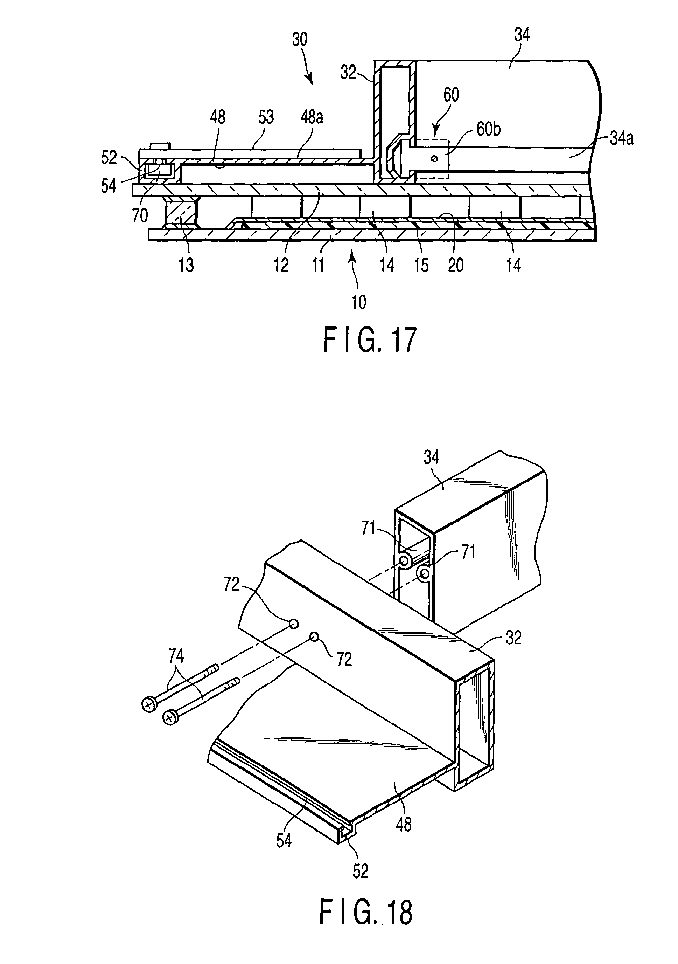

In mounting the circuit board 53 on the first mounting portion 48, the circuit board may be fixed with use of a movable link 70, as shown in FIG. 17. The movable link 70 is movably set in the slot 54 of the first mounting portion 48 and has tapped holes. The circuit board 53 can be mounted in an optional position on the first mounting portion 48 by screwing the circuit board 53 to the movable link 70 that is moved to and located in any desired position. Likewise, the circuit board can be also mounted on the second mounting portion 50 with use of a movable link.

In screwing a circuit board directly to a mounting portion, the position of tapped holes formed in the mounting portion must be changed depending on changes of the shape, size, etc. of the circuit board. According to the configuration based on the use of the movable link 70, however, the circuit board can be mounted in an optional position if the movable link is moved to a desired position that depends on the shape or size of the circuit board. Thus, various circuit boards can be easily mounted without machining tapped holes in the mounting portions of the reinforcing frame 30.

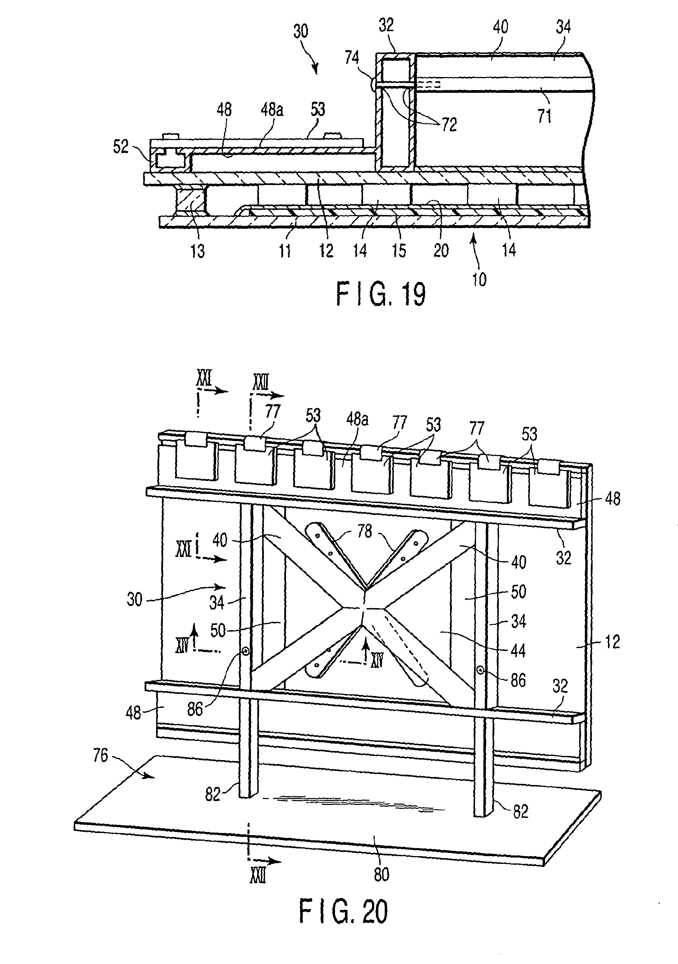

In the second embodiment described above, the first frame portion 32 and the second frame portion 34 are connected by the connecting member 60. As shown in FIGS. 18 and 19, however, each end of the second frame portion 34 may be connected to the first frame portion 32 by screwing. In this case, a pair of cylindrical beads 71 are molded integrally on the inner surface of the second frame portion 34 and extend along the longitudinal direction of the second frame portion. The bore of each bead 71 forms a tapped hole. A pair of through holes 72 are formed in that part of the first frame portion 32 to which an end of the second frame portion 34 is connected. Fixing screws 74 are passed through the through holes 72 from outside the first frame portion 32 and screwed into the bores of their corresponding beads 71 of the second frame portion 34, whereupon the second frame portion and the first frame portion are connected.

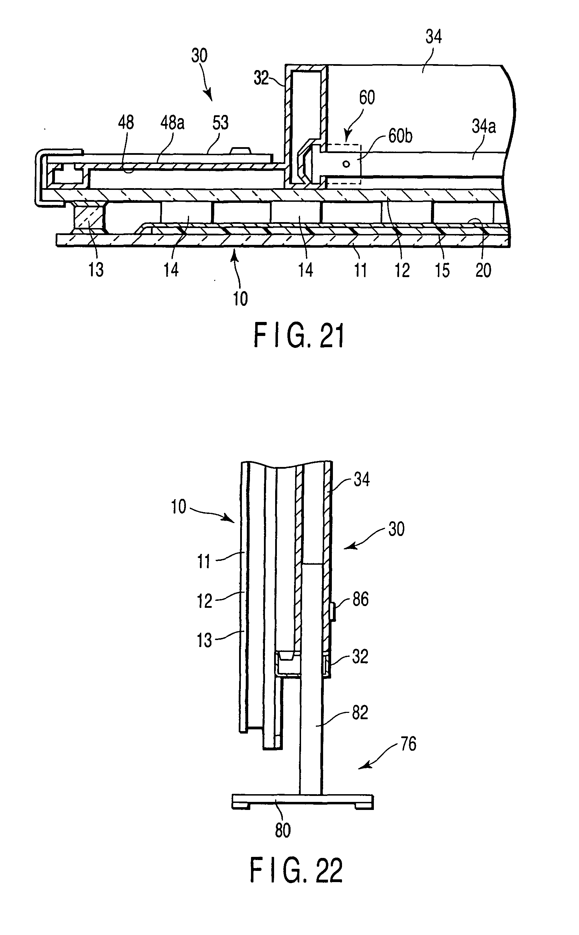

The following is a description of an FED according to a third embodiment of this invention. As shown in FIGS. 20 to 22, this FED comprises a reinforcing frame 30 that reinforces an envelope 10 and a removable stand 76 that supports the envelope in an upright state. The reinforcing frame 30 has first and second frame portions 32 and 34 in the form of a well curb and first and second mounting portions 48 and 50 that extend integrally from the first and second frame portions, respectively. As in the foregoing embodiments, the first and second frame portions 32 and 34 are each formed of a hollow rod having a rectangular cross section and are located with respect to a rear substrate 12 of the envelope 10 so as to meet the aforesaid relationship between ΔH/H and ΔV/V.

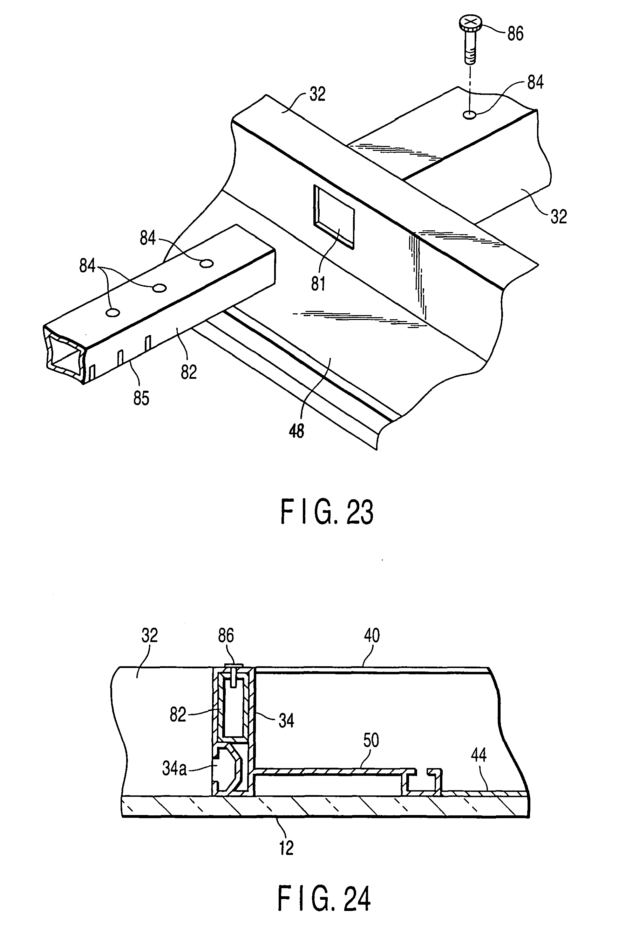

As shown in FIG. 23, the one first frame portion 32 is formed with a pair of passage holes 81 through which leg portions of the stand 76 are passed in the manner mentioned later and which are opposed to one ends of the second frame portions 34, individually.

The reinforcing frame 30 is provided with a rectangular reinforcing plate 44 and a pair of connecting rods 40 that individually serve as reinforcing members. The reinforcing plate 44 is provided on the rear substrate side of the reinforcing frame 30 and connects diagonally opposite corner portions of the reinforcing frame. The reinforcing plate 44 is fixed to the first frame portions 32 and the second mounting portions 50 so as to cover a rectangular region that is surrounded by the first frame portions and the second mounting portions and connects four corner portions to one another. The pair of connecting rods 40 are provided on the outer surface side of the reinforcing frame 30 and connect corner portions that are defined by the first frame portions 32 and the second frame portions 34.

The reinforcing plate 44 is formed with reinforcing ribs 78 that extend in the form of a cross, for example. By use of these reinforcing ribs 78, the resonance frequency of the reinforcing plate 44, formed of a flat plate, can be increased. Thus, the resonance of the reinforcing plate 44 can be restrained to prevent the envelope 10 from being damaged by vibration of the reinforcing plate. The shape and extending directions of the reinforcing ribs 78 can be set optionally.

As shown in FIGS. 20 to 21, a plurality of circuit boards 53 are mounted on the first mounting portion 48 of the reinforcing frame 30 and arranged side by side along a long side of the rear substrate 12. The circuit boards 53 are connected electrically to wires 21 (see FIG. 1) situated on the peripheral edge portion of the rear substrate 12 through flexible printed circuit boards 77, individually. The circuit boards may be mounted on the second mounting portions 50 and the reinforcing plate 44, as well as on the first mounting portion 48.

The stand 76 has a base 80 in the form of a rectangular plate that can be placed on an installation surface and a pair of leg portions 82 set up on the base. Each leg portion 82 is formed of, for example, a hollow square bar and extends substantially at right angles to the base 80. As shown in FIG. 20 and FIGS. 22 to 24, a plurality of tapped holes 84 are formed in an extending end portion of each leg portion 82 and arranged at predetermined intervals along the extending direction of the leg portion. The extending end portion of each leg portion 82 is engraved with a scale 85 that indicates the height level of the leg portion.

The respective extending end portions of the pair of leg portions 82 are inserted individually into the pair of second frame portions 34 through the passage holes 81 in the first frame portion 32. The extending end portion of each leg portion 82 is inserted into an optional position in each second frame portion 34 and fixed to the second frame portion 34 by a fixing screw 86. The fixing screw 86 that serves as fixing means is screwed into any of the tapped holes 84 of the leg portion 82 through the fixing screw 86 in each first frame portion 32.

The extending end portion of each leg portion 82 can be slidably inserted into the second frame portion 34, and its insertion length is adjustable. Specifically, the extending end portion of the leg portion 82 can be inserted for a desired length in the second frame portion 34 and fixed through any of the tapped holes 84 in the leg portion 82 by the fixing screw 86. By doing this, the height of the stand 76 can be freely adjusted. As this is done, the height can be adjusted with reference to the scale 85 on the leg portion 82. If the stand 76 is unnecessary, it can be easily removed by loosening the fixing screws 86 and drawing out the pair of leg portions 82 from the second frame portions 34. A height adjustment mechanism for the stand 76 is not limited to the aforesaid combination of the tapped holes and the fixing screws, and may be configured for continuously variable adjustment.

In the third embodiment, other configurations are the same as those of the foregoing first and second embodiments, so that like reference numerals are used to designate like portions, and a detailed description thereof is omitted.

According to the FED of the third embodiment constructed in this manner, the reinforcing frame 30 can maintain the sufficient strength of the envelope 10 despite the increase of its size that is involved in the increase of the screen size. According to this FED, like the one according to the first embodiment, the optimum reinforcing frame of the minimum necessary size can be obtained, so that the entire FED can be reduced in weight and thickness without failing to enhance the mechanical strength of the device and prevent resonance.

Since the stand 76 is attached by utilizing the second frame portions 34 of the reinforcing frame 30, there is no need of any independent components for stand attachment, so that the number of components and manufacturing costs can be reduced. Since the leg portions 82 of the stand are inserted in the hollow second frame portions 34 for attachment, moreover, the mounting strength of the stand can be fully increased.

This invention is not limited directly to the embodiments described above, and its components may be embodied in modified forms without departing from the spirit of the invention. Further, various inventions may be made by suitably combining a plurality of components described in connection with the foregoing embodiments. For example, some of all the components according to the foregoing embodiments may be omitted. Furthermore, components according to different embodiments may be combined as required.

In the embodiments described above, surface-conduction electron emitting elements are used as the electron emitting elements. Alternatively, however, they may be replaced with any other electron emitting elements, such as pn-type cold-cathode devices or field-emission electron emitting elements. Further, this invention is not limited to an FED, SED, etc., but is also applicable to any other flat display devices such as a PDP.

### Industrial Applicability

According to this invention, there may be provided an image display device capable of maintaining sufficient mechanical strength with minimum reinforcement and realizing reduction in thickness and weight.

## Claims

1. An image display device comprising an envelope, provided with a front substrate having a display screen and a rectangular rear substrate opposed to the front substrate, and a reinforcing frame which is attached to an outer surface of the rear substrate and reinforces the envelope,
the reinforcing frame having a pair of first frame portions which individually extend substantially parallel to long sides of the rear substrate and a pair of second frame portions which extend substantially parallel to short sides of the rear substrate and connect the first frame portions,
each of the second frame portions meeting a relationship ΔH/H = 12 to 32%, where H is a length of each long side of the rear substrate and ΔH is a distance between each short side of the rear substrate and each of the second frame portions.

2. The image display device according to claim 1, wherein each of the second frame portions meets a relationship ΔH/H = 16 to 28%.

3. The image display device according to claim 1, wherein each of the second frame portions meets a relationship ΔH/H = 18 to 26%.

4. The image display device according to claim 1, wherein each of the second frame portions meets a relationship ΔH/H = 20 to 24%.

5. The image display device according to any one of claims 1 to 4, wherein each of the first frame portions meets a relationship ΔV/V = 12 to 32% where V is a length of each short side of the rear substrate and ΔV is a distance between each long side of the rear substrate and each of the first frame portions.

6. The image display device according to claim 5, wherein each of the first frame portions meets a relationship ΔV/V = 16 to 28%.

7. The image display device according to claim 5, wherein each of the first frame portions meets a relationship ΔV/V = 18 to 26%.

8. The image display device according to claim 5, wherein each of the first frame portions meets a relationship ΔV/V = 20 to 24%.

9. The image display device according to claim 1, wherein the reinforcing frame has four corner portions at which the first frame portions and the second frame portions cross one another and reinforcing members which connect the corner portions opposed in diagonal directions.

10. The image display device according to claim 9, wherein the reinforcing members include reinforcing plates which are fixed overlapping the first and second frame portions and connect the four corner portions.

11. The image display device according to claim 10, wherein the reinforcing plates have reinforcing ribs.

12. The image display device according to claim 9, wherein the reinforcing members include a rectangular first reinforcing plate, which is fixed to the first and second frame portions so as to include the four corner portions and located on the rear substrate side, and a rectangular second reinforcing plate, which is fixed on the outer surface side of the first and second frame portions so as to include the four corner portions and opposed to the first reinforcing plate with a gap therebetween.

13. The image display device according to claim 9, wherein the reinforcing members include a pair of connecting rods which individually connect two sets of diagonally opposite corner portions.

14. The image display device according to claim 13, wherein the pair of connecting rods extend across each other and are connected to each other at an intersection thereof.

15. The image display device according to claim 9, wherein the reinforcing members include a pair of first connecting rods, which individually connect two sets of diagonally opposite corner portions and are situated on the rear substrate side, and a pair of second connecting rods, which connect the two sets of connecting rods and are situated on the outer surface side of the first and second frame portions and opposed to the first connecting rods with a gap therebetween.

16. The image display device according to claim 15, wherein the pair of first connecting rods extend across each other and are connected to each other at an intersection thereof, and the pair of second connecting rods extend across each other and are connected to each other at an intersection thereof.

17. The image display device according to claim 9, wherein the reinforcing members include a rectangular reinforcing plate which is fixed to the first and second frame portions so as to include the four corner portions and a pair of connecting rods which individually connect two sets of diagonally opposite corner portions.

18. The image display device according to claim 1, wherein the reinforcing frame has a first mounting portion which extends along the outer surface of the rear substrate from each of the first frame portions toward each long side of the rear substrate and a second mounting portion which extends along the outer surface of the rear substrate from each of the second frame portions toward the other second frame portion.

19. The image display device according to claim 18, wherein the first and second mounting portions each have a flat mounting surface configured to be mounted with a circuit board.

20. The image display device according to claim 18 or 19, wherein the first mounting portion has a slot which opens in the mounting surface and extends in an extending direction of the first frame portions and a movable link member configured to fix the circuit board.

21. The image display device according to claim 18 or 19, wherein at least one of the first frame portions has a through hole configured to be penetrated by a wire which connects a circuit board mounted on the first mounting portion and a circuit board mounted on the second mounting portion.

22. The image display device according to claim 1, wherein the reinforcing frame has a plurality of adhesive joints individually bonded to the outer surface of the rear substrate, the plurality of adhesive joints individually extending in directions tangent to a circle concentric with a center of the rear substrate.

23. The image display device according to claim 1, wherein each of the first frame portions and each of the second frame portions have a first guide slot and a second guide slot, respectively, extending in a longitudinal direction thereof, and the reinforcing frame comprises a plurality of connecting members which individually connect the first and second frame portions, each of the connecting members having a first link portion movably attached to the first guide slot of the first frame portion and a second link portion passed through the second guide slot of the second frame portion.

24. The image display device according to claim 1, which comprises a stand which has a base configured to be placed on an installation surface and a leg portion set up on the base and supports the envelope, and wherein the second frame portions of the reinforcing frame are hollow, the first frame portion has a through hole which opens into the second frame portion, and the leg portion of the support leg is inserted into the second frame portion through the through hole.

25. The image display device according to claim 24, wherein the leg portion is inserted so that the length of insertion is adjustable along the second frame portion, and the reinforcing frame comprises fixing means which fixes the leg portion to the second frame portion.

26. An image display device comprising an envelope, provided with a front substrate having a display screen and a rectangular rear substrate opposed to the front substrate, and a reinforcing frame which is attached to an outer surface of the rear substrate and reinforces the envelope,
the reinforcing frame having a pair of first frame portions which individually extend substantially parallel to long sides of the rear substrate at distances therefrom, a pair of second frame portions which extend substantially parallel to short sides of the rear substrate at distances therefrom and connect the first frame portions, a first mounting portion which extends along the outer surface of the rear substrate from each of the first frame portions toward each long side of the rear substrate and is configured to be mounted with an electronic component, and a second mounting portion which extends along the outer surface of the rear substrate from each of the second frame portions toward the other second frame portion and is configured to be mounted with an electronic component.

27. An image display device comprising an envelope, provided with a front substrate having a display screen and a rectangular rear substrate opposed to the front substrate, a reinforcing frame which is attached to an outer surface of the rear substrate and reinforces the envelope, and a removable stand which supports the envelope,
the reinforcing frame having a pair of first frame portions which individually extend substantially parallel to long sides of the rear substrate at distances therefrom and a pair of hollow second frame portions which extend substantially parallel to short sides of the rear substrate at distances therefrom and connect the first frame portions,
the stand having a base configured to be placed on an installation surface and a pair of leg portions individually set up on the base and having end portions inserted in the second leg portions.

28. The image display device according to claim 1, 26 or 27, which comprises a phosphor screen which is provided on an inner surface of the front substrate and forms the display screen and a plurality of electron emitting elements which are provided on an inner surface of the rear substrate and excite the phosphor screen.
